# EUROPEAN PATENT SPECIFICATION

(11) **EP 4 395 040 B1**
(45) Date of publication and mention of the grant of the patent: **11.11.2026**
(21) Application number: 23860716.2
(22) Date of filing: 04.08.2023
(51) Int. Cl.: H01M 50/383, H01M 50/367, H01M 50/105, H01M 50/211, H01M 50/342, H01M 50/502, H01M 10/6551, H01M 10/653, H01M 50/249

(54) **BATTERY PACK AND VEHICLE INCLUDING SAME**
BATTERIEPACK UND FAHRZEUG DAMIT
BLOC-BATTERIE ET VÉHICULE LE COMPRENANT

(30) Priority: 31.08.2022 KR 20220110386; 19.05.2023 KR 20230065197
(43) Date of publication of application: 03.07.2024
(73) Proprietor: LG Energy Solution, Ltd., Seoul 07335 (KR)
(72) Inventor: PARK, Jin-Yong, Daejeon 34122 (KR); KWON, Woo-Yong, Daejeon 34122 (KR); KIM, Kyung-Woo, Daejeon 34122 (KR); HWANG, Ji-Soo, Daejeon 34122 (KR); KIM, Seung-Joon, Daejeon 34122 (KR); KIM, In-Soo, Daejeon 34122 (KR); JEONG, Jong-Ha, Daejeon 34122 (KR); CHI, Ho-June, Daejeon 34122 (KR); KANG, Jong-Mo, Daejeon 34122 (KR); MOON, Duck-Hee, Daejeon 34122 (KR); LEE, Tae-Kyeong, Daejeon 34122 (KR); CHUNG, Se-Yun, Daejeon 34122 (KR)
(74) Representative: Plasseraud IP
(86) International application number: PCT/KR2023/011533
(87) International publication number: WO 2024/049036

(56) References cited:
- EP-A1- 4 350 861
- CN-A- 114 374 049
- JP-A- 2009 277 647
- JP-A- 2016 197 551
- JP-A- 2017 134 952
- JP-B2- 7 010 671
- KR-A- 20170 069 003
- KR-A- 20190 122 474
- KR-A- 20220 021 143
- US-A1- 2022 013 755
- US-B2- 11 024 901

## Description

### TECHNICAL FIELD

The present application claims priority to Korean Patent Application No. 10-2022-0110386 filed on August 31, 2022 and Korean Patent Application No. 10-2023-0065197 filed on May 19, 2023 in the Republic of Korea.

The present disclosure relates to a battery assembly, and a battery pack and a vehicle including the same, and more specifically, relates to a battery pack manufactured in a cell-to-pack manner and a vehicle including the same.

### BACKGROUND ART

KR 2017 0069003 relates to a battery module.

CN 114 374 049A relates to a battery box and a battery pack.

US 2022/013755 A1 relates to a case of battery, a battery and a power consumption device.

JP 7 010671 B2 relates to a structure of a lithium ion battery module.

US 11,024,901 B2 relates to a battery cooling plate with integrated air vents.

In general, secondary batteries refer to batteries capable of being repeatedly charged and discharged, such as lithium-ion batteries, lithium polymer batteries, nickel-cadmium batteries, nickel-hydrogen batteries, nickel-zinc batteries, and the like. The output voltage of a battery cell, which is a basic unit of charging and discharging of the secondary batteries, is approximately 2.5V to 4.2V.

Recently, secondary batteries have been applied to devices that require high output voltage and a large amount of charging capacity, such as electric vehicles or ESSs (Energy Storage Systems), and accordingly, a battery pack, which is manufactured in a manner of configuring a battery module by connecting a plurality of battery cells in series or parallel and reconnecting multiple battery modules configured above in series or parallel, has been widely used.

However, as disclosed in Korean Patent Publication No. 10-2379227, Korean Unexamined Patent Publication No. 10-2022-0052183, and the like, in the existing technologies, since battery cells are accommodated in a box-shaped metal case to configure battery modules and then these battery modules are accommodated in a battery pack case to manufacture a battery pack, there are problems in which the weight and volume of the entire battery pack increase and in which the energy density of the battery pack is lowered.

In addition, in order to increase the energy density of the battery pack, if the existing cell-to-pack method of installing multiple battery cells directly in the pack case of the battery pack is applied to a pouch-type secondary battery with a soft case, it is difficult to handle or stack battery cells at the same time, and there is a risk of damage to the battery cells during the process of installing the battery cells in the pack case.

In addition, according to the existing technologies, since particles or foreign substances discharged from the battery cell, in the case of thermal runaway of the battery cell, accumulate inside the battery pack, it is difficult to effectively vent gases, and the internal pressure of the battery pack increases, causing damage to the battery pack or explosion thereof.

### DISCLOSURE

### Technical Problem

The present disclosure has been designed to solve the problems of the related art, and therefore the present disclosure is directed to providing a battery pack that reduces the overall weight and volume of the battery pack, increases the energy density, and enables safe and easy handling and installation of battery cells when manufacturing the battery pack, and a vehicle including the same.

In addition, the present disclosure is directed to providing a battery pack that prevents structural damage or explosion of the battery pack when thermal runaway of the battery cell occurs and suppresses chain thermal runaway between battery cells, and a vehicle including the same.

### Technical Solution

According to one aspect of the present disclosure, there is provided a battery pack including: a cell unit including at least one battery cell; and a case provided with an accommodation room having a bottom portion on which the cell unit is seated and accommodating the cell unit in the accommodation room, wherein the bottom portion comprises a pocket, the pocket is configured to collect masses discharged and falling from the battery cell included in the cell unit.

The cell unit further includes a cell cover having a slot into which the at least one battery cell is inserted and an opening through which an electrode lead of the at least one battery cell inserted into the slot is exposed, and covering the at least one battery cell inserted into the slot.

In an embodiment, the cell cover may be disposed such that the entrance of the slot faces the bottom portion, and the entrance of the pocket may be provided at a position corresponding to the entrance of the slot.

In an embodiment, the entrance of the pocket may be provided at a position corresponding to the entrance portion of the slot, which is adjacent to the electrode lead of the at least one battery cell, among the entrance of the slot.

In an embodiment, the cell unit may further include: a bus bar electrically connected to the electrode lead; and a bus bar frame disposed in the opening of the cell cover to support the bus bar.

In an embodiment, the bottom portion may further include a gas passage extending along the inside of the bottom portion, and the pocket may be configured to be connected to the gas passage.

In an embodiment, the bottom portion may further include a membrane that blocks an inlet of the gas passage connected to the pocket, and the membrane may be configured to rupture when the surrounding pressure rises to a predetermined pressure or more to open the inlet of the gas passage.

In an embodiment, the battery pack may further include a heat sink disposed between the cell unit and the bottom portion to cool the battery cell included in the cell unit, and the heat sink may have a guide hole provided in a portion of the heat sink corresponding to the entrance of the pocket to guide the masses to the entrance of the pocket.

In an embodiment, the guide hole may be configured to gradually widen from the pocket to the cell unit.

In an embodiment, the battery pack may further include a TIM (Thermal Interface Material) interposed between the cell unit and the heat sink.

In an embodiment, the cell unit is provided in plural, and the plurality of cell units may be stacked on each other in one direction.

In an embodiment, the at least one battery cell may be configured as a pouch-type secondary battery cell.

A vehicle according to another aspect of the present disclosure may include the battery pack according to any one of the embodiment described above.

### Advantageous Effects

According to the present disclosure, a pocket configured to collect a mass discharged from a battery cell and falling under its own weight may be provided in the bottom portion of a battery pack case, thereby effectively venting gases in the case of thermal runaway of the battery cell and preventing damage or explosion of the battery pack due to an increase in the internal pressure of the battery pack.

In addition, since multiple battery cells may be partially covered by a cell cover with a simplified structure and directly mounted in the battery pack case, instead of being accommodated in a separate module case and mounted in the battery pack case, it is possible to reduce the weight and volume of the entire battery pack, increase the energy density of the battery pack, facilitate safe handling and installation of the battery cells when manufacturing the battery pack, and reduce manufacturing costs.

In addition, a gas passage leading to the pocket may be provided in the bottom portion of the battery pack case, thereby diversifying gas venting paths inside the battery pack and providing an alternative path in the case where other gas venting paths are blocked.

In addition, the gas flowing through a gas passage provided in the bottom portion of the battery pack case or another gas passage provided on the wall of the corresponding case may be vented in a predetermined direction through a gas valve, so that the gas venting direction of the battery pack mounted on the bottom of the vehicle may be set to the rear direction or lateral direction rather than the upward direction where the occupants are located, thereby improving the safety of the occupants.

In addition, a blocking portion of the cell cover may support the battery cell inserted into a slot of the cell cover to block removal of the battery cell, thereby preventing the battery cell from changing in its position or leaving out of the cell cover and ensuring the safety and reliability of the battery pack.

In addition, an insertion groove may be provided in the blocking portion of the cell cover such that a jig that comes into contact with the inner surface of the cell cover and changes the slot width of the cell cover is easily inserted thereto, thereby facilitating insertion of a battery cell into the cell cover and preventing damage to the battery cell.

Furthermore, those skilled in the art to which the present disclosure pertains will be able to clearly understand from the following description that various embodiments according to the present disclosure are able to solve various technical problems not mentioned above.

### DESCRIPTION OF DRAWINGS

FIG. 1 is a diagram illustrating a battery pack according to an embodiment of the present disclosure.
FIG. 2 is an exploded view illustrating a battery assembly of a battery pack according to an embodiment of the present disclosure.
FIG. 3 is an enlarged view illustrating the area M1 in FIG. 1.
FIG. 4 is a diagram illustrating a cell unit of a battery pack according to an embodiment of the present disclosure.
FIG. 5 is an exploded view illustrating the cell unit shown in FIG. 4.
FIG. 6 is a cross-sectional view taken along line A1-A1' of the battery pack shown in FIG. 1.
FIG. 7 is a diagram illustrating a lower portion of the cell unit shown in FIG. 6.
FIGS. 8 and 9 are diagrams illustrating a method of assembling the cell unit shown in FIG. 4.
FIG. 10 is a diagram illustrating a cell cover according to a modified embodiment.
FIG. 11 is a diagram illustrating a cell cover according to another modified embodiment.
FIG. 12 is a diagram illustrating a vehicle according to an embodiment of the present disclosure.

### BEST MODE

Hereinafter, embodiments according to the present disclosure will be described in detail with reference to the accompanying drawings to clarify solutions corresponding to the technical problems of the present disclosure. However, in describing the present disclosure, a description of related known technology, which may obscure the gist of the present disclosure, may be omitted. In addition, the terms used in this specification are defined in consideration of the functions in the present disclosure and may vary depending on the intention of the designer, manufacturer, etc. or custom thereof. Therefore, definitions of the terms described below should be made based on the description throughout this specification.

For reference, in this specification, terms indicating directions are based on the components shown in the attached drawings and are relative terms that may change depending on the postures or positions of the actual components.

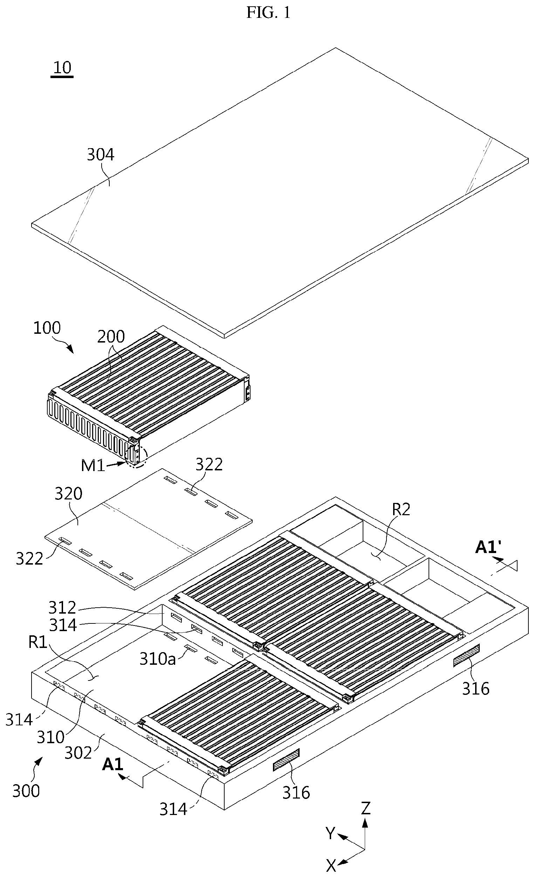

FIG. 1 illustrates a battery pack 10 according to an embodiment of the present disclosure.

As shown in FIG. 1, the battery pack 10 includes a battery assembly 100 and a case 300 that accommodates one or more battery assemblies 100.

In addition, the battery assembly 100 includes a plurality of cell units 200. Each cell unit 200 may include at least one battery cell and a cell cover that partially surrounds and covers the at least one battery cell, and may be stacked with other cell units in the width direction (Y-axis direction).

The battery cell included in each cell unit 200 may be configured as a pouch-type secondary battery cell. In this case, the pouch-type secondary battery cell may be manufactured by storing the electrode assembly and electrolyte material in a pouch-type case and sealing the case. Depending on the embodiment, the battery cell may be configured in various forms, such as a prismatic secondary battery cell or a cylindrical secondary battery cell.

These multiple cell units 200 may be stacked in one direction to be accommodated in the case 300.

The case 300 has one or more accommodation rooms R1 having a bottom portion 310 on which the cell unit 200 is seated so that the accommodation room R1 accommodates the cell unit 200. For example, the case 300 may be configured such that a plurality of battery assemblies 100 is respectively accommodated in separate accommodation rooms.

To this end, the case 300 may include a lower case 302 having an opening at the top thereof and an internal space leading to the opening, and an upper case 304 that covers the opening of the lower case 302.

The lower case 302 may include walls 312 that divide the interior space thereof into a plurality of accommodation rooms. A gas inlet 314 into which gas generated from the battery assembly 100 accommodated in the accommodation room R1 flows may be provided on the wall 312 of the lower case 302 adjacent to each accommodation room R1. In addition, a gas valve 316 for venting gas may be provided on the outer surface of the lower case 302. A gas passage connecting the gas inlet 314 and the gas valve 316 may be provided inside the lower case 302.

In this case, a gas venting path for venting gas to the gas valve 316 may be provided individually for each accommodation room. That is, the gas generated from a first accommodation room may vent through a first gas venting path comprised of a first gas inlet, a first gas passage, and a first gas valve, and the gas generated from a second accommodation room may vent through a second gas venting path comprised of a second gas inlet, a second gas passage, and a second gas valve.

As will be described again below, the bottom portion 310 of the accommodation room R1 may include a pocket 310a configured to collect masses discharged and falling from the battery cell included in the cell unit 200.

In addition, the battery pack 10 may further include a heat sink 320 that is disposed between the cell unit 200 of the battery assembly 100 and the bottom portion 310 of the accommodation room R1 to cool the battery cells included in the cell unit 200.

In this case, the heat sink 320 may have a guide hole 322 that is provided at a portion of the heat sink corresponding to the entrance of the pocket 310a so as to guide the masses to the entrance of the pocket 310a. This heat sink 320 may be made of a metal material with high thermal conductivity and heat resistance.

Depending on the embodiment, the heat sink 320 may be configured integrally with the bottom portion 310 of the accommodation room R1.

Meanwhile, the case 300 may have an accommodation space R2 for accommodating various electrical components required for the operation of the battery pack 10.

In an embodiment, the battery pack 10 may further include a control module. This control module may include a BMS (Battery Management System) that manages charging and discharging operations, SOC (State Of Charge), SOH (State Of Health), etc. of the battery cells included in the battery assembly, and may be mounted in the accommodation space R2 of the case 300.

In addition, the battery pack 10 may further include a switching unit. This switching unit may be configured to control the electrical connection between the battery pack 10 and an external circuit. To this end, the switching unit may optionally include a current sensor, a power relay, a fuse, and the like.

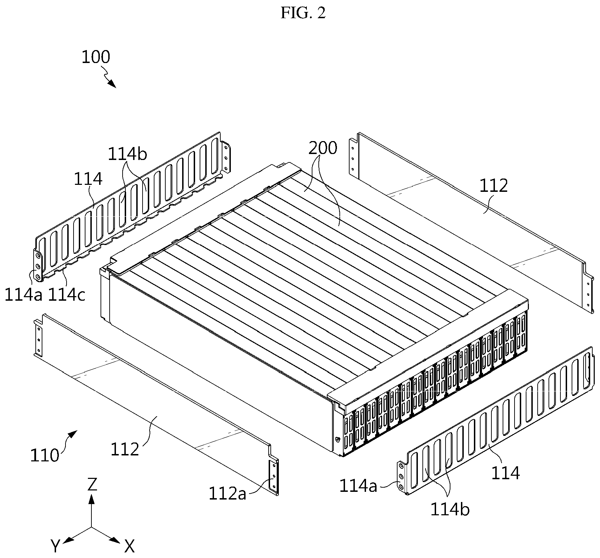

FIG. 2 is an exploded view illustrating the battery assembly 100 of the battery pack shown in FIG. 1.

As shown in FIG. 2, the battery assembly 100 according to an embodiment of the present disclosure includes a plurality of cell units 200 and a support structure 110.

Each of the plurality of cell units 200 includes at least one battery cell and is configured to be stacked side by side in the width direction (Y-axis direction). As will be described again below, each cell unit 200 may include at least one battery cell that is a basic unit of charge and discharge and a cell cover that partially covers and supports the battery cell.

The support structure 110 is configured to support the plurality of cell units 200 and maintain the stacked state of the plurality of cell units 200. To this end, the support structure 110 may include a side wall 112 and an integrated end cover 114. The side wall 112 and the integrated end cover 114 may be disposed along the lateral perimeter of the plurality of cell units 200 stacked on each other.

In an embodiment, the support structure 110 may include a pair of side walls 112 and a pair of integrated end covers 114, respectively.

In this case, the side walls 112 may be configured such that each of them is disposed at both ends of the plurality of cell units 200 in the width direction (Y-axis direction) or stacking direction of the plurality of cell units 200, thereby supporting the plurality of cell units 200.

That is, among the pair of side walls, a first side wall may be disposed adjacent to a first cell unit located at the outermost of one side of the plurality of cell units 200, and a second side wall may be disposed adjacent to a second cell unit located at the outermost of the other side of the plurality of cell units 200.

The side walls 112, together with the integrated end cover 114 to be described later, bring the plurality of cell units 200 into close contact with each other to form a single cell unit block capable of being handled simultaneously. In this case, the side walls 112 may evenly distribute the pressure applied to the plurality of cell units 200 throughout the cell units 200.

This side wall 112 may be made of a metal material including aluminum or stainless steel, or may be made of a material obtained from a combination of metal and polymer synthetic resin through insert molding.

Each integrated end cover 114 may be disposed on one of both ends of the plurality of cell units 200 in the longitudinal direction (X-axis direction) of the plurality of cell units 200. In addition, the integrated end cover 114 may have one end connected to the first side wall and the other end connected to the second side wall so as to be configured to simultaneously cover openings of two or more cell covers among the cell covers of the plurality of cell units 200.

To this end, the side wall 112 may include a connection portion 112a provided at both ends thereof and connected to one end or the other end of the integrated end cover 114. According thereto, the integrated end cover 114 may include a main body portion, which covers the openings of the plurality of cell units 200, and a corresponding connection portion 114a extending from the main body portion and connected to the connection portion 112a of the side wall 112.

In an embodiment, the integrated end cover 114 may have a vent hole 114b for venting gas generated from the battery cell of the cell unit, which is formed in each of portions of the integrated end cover corresponding to the openings of the plurality of cell units 200.

In addition, as shown in FIG. 2, the integrated end cover 114 may include a support portion 114c that extends from the main body portion to the lower ends of the plurality of cell units 200 and supports the lower ends of the plurality of cell units 200.

This integrated end cover 114 may be made of a metal material including aluminum or stainless steel or a polymer synthetic resin, or may be made of a material obtained from a combination of metal and polymer synthetic resin through insert molding.

As described above, since the integrated end cover 114 may be applied to the battery assembly 100 to support the cell units and integrally cover the openings of the cell units, unit end covers applied to each cell unit may be omitted, and the manufacturing process of the battery assembly may be simplified.

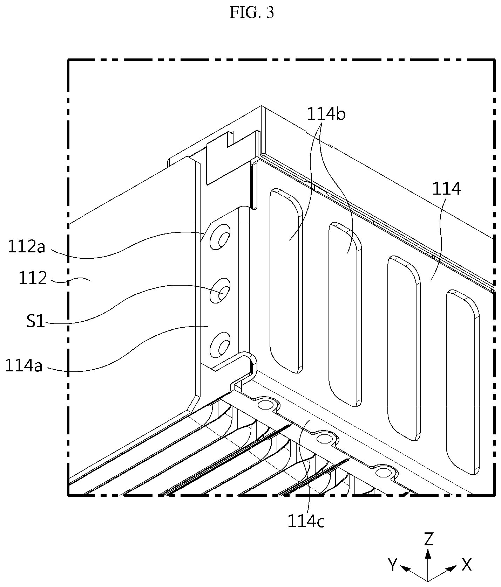

FIG. 3 is an enlarged view illustrating the area M1 in FIG. 1.

As shown in FIG. 3, the side wall 112 and the integrated end cover 114 included in the support structure 110 of the battery assembly 100 may be connected to each other, thereby supporting a plurality of cell units 200. To this end, the connection portion 112a of the side wall 112 may have an insertion groove into which the corresponding connection portion 114a of the integrated end cover 114 is inserted.

The corresponding connection portion 114a of the integrated end cover 114 may be inserted into the insertion groove provided in the connection portion 112a of the side wall 112 and then fixed to the connection portion 112a of the side wall 112 by a fastening member S1 such as a screw or bolt.

In addition, the support portion 114c of the integrated end cover 114 may be configured to extend from the main body portion of the integrated end cover 114 to the lower ends of the plurality of cell units 200 and support the lower ends of the plurality of cell units 200. In this case, the support portion 114c of the integrated end cover 114 may be configured to support a bus bar frame of each cell unit 200.

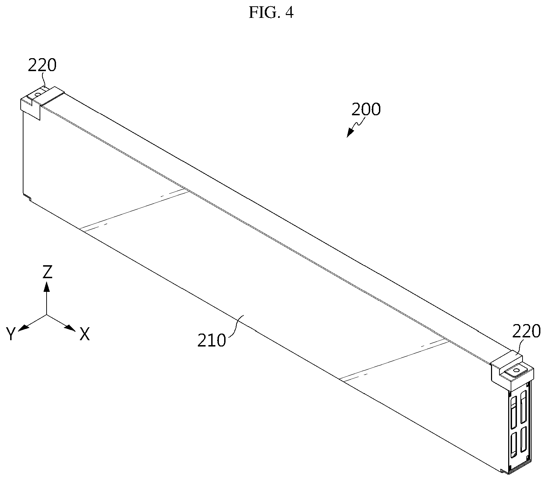

FIG. 4 illustrates a cell unit 200 of a battery assembly according to an embodiment of the present disclosure.

As shown in FIG. 4, the cell unit 200 includes a cell cover 210 that partially covers and supports at least one battery cell to remain in an upright state.

In addition, the cell unit 200 may further include a bus bar assembly 220. The bus bar assembly 220 may include a bus bar that is electrically connected to an electrode lead of the battery cell inserted into the cell cover 210, and may be disposed at both ends of the cell cover 210 in the longitudinal direction (X-axis direction) thereof.

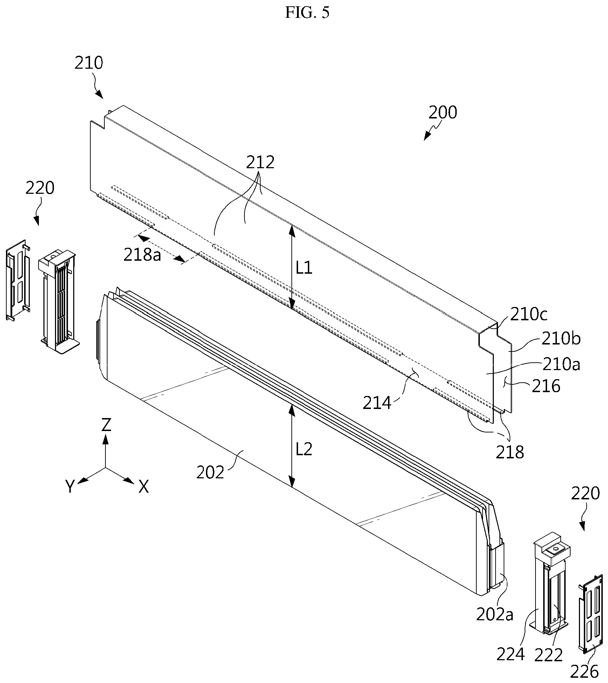

FIG. 5 is an exploded view of the cell unit 200 shown in FIG. 4.

As shown in FIG. 5, the cell unit 200 includes at least one battery cell 202 and a cell cover 210.

The battery cell 202 corresponds to the most basic secondary battery capable of being charged and discharged, and may be manufactured by storing an electrode assembly and electrolyte material inside a case and sealing the case. The electrode assembly may be manufactured by interposing a separator between the positive electrode and the negative electrode.

This battery cell 202 may be configured as a pouch-type secondary battery cell having a predetermined length and height. In addition, electrode leads 202a electrically connected to the electrode assembly may be provided at both ends of the battery cell 202, respectively, in the longitudinal direction (X-axis direction) thereof.

The cell cover 210 may be configured to partially cover and support at least one battery cell 202 to remain in an upright state. For example, as shown in FIG. 5, the cell cover 210 may be configured to partially cover and support the three battery cells 202 stacked on each other, thereby maintaining the battery cells in an upright state.

To this end, the cell cover 210 is configured to have a slot 214 into which at least one battery cell 202 is inserted and an opening 216 through which the electrode lead 202a of at least one battery cell 202 inserted into the slot 214 is exposed to the outside of the cell cover 210, and cover at least one battery cell 202 inserted into the slot 214.

When the cell unit 200 is seated in the accommodation room R1 of the above-described case 300, the cell cover 210 may be disposed such that the entrance of the slot 214 faces the bottom portion 310 of the accommodation room R1. In this case, the entrance of the pocket 310a provided in the bottom portion 310 may be provided at a position corresponding to the entrance of the slot 214.

This cell cover 210 may be configured in an "n" shape or "u" shape so as to surround three sides of the at least one battery cell.

For example, the cell cover 210 may include a first cover portion 210a forming one side wall of the slot 214 into which at least one battery cell is inserted, a second cover portion 210b forming the other side wall of the slot 214, and a third cover portion 210c that connects the first cover portion 210a and the second cover portion 210b to form a distal end of the slot 214.

That is, the first cover portion 210a may cover one side of the battery cells inserted into the slot 214. In addition, the second cover portion 210b may cover the other side of the inserted battery cells. In addition, the third cover portion 210c may cover the top of the inserted battery cells.

In this case, the entrance of the slot 214 and the opening 216 through which the electrode lead of at least one battery cell 202 inserted into the slot 214 is exposed may be provided between the first cover portion 210a and the second cover portion 210b.

The height L1 of the cell cover 210 (or the depth of the slot 214) may be configured to be greater than the height L2 of the battery cell 202 in the upright state. Accordingly, a free space produced inside the slot 214 into which the battery cell 202 is inserted may be used as a gas venting passage.

Although it is illustrated in FIG. 5 that three battery cells 202 are covered by one cell cover 210, the number of battery cells covered by the cell cover 210 may vary depending on the scale of the cell cover 210.

In an embodiment, the cell unit 200 may further include a bus bar assembly 220. The bus bar assembly 220 may include a bus bar 222 electrically connected to the electrode lead 202a of the battery cell 202 inserted into the cell cover 210 and a bus bar frame 224 disposed in the opening 216 of the cell cover 210 and supporting the bus bar 222.

In addition, the bus bar assembly 220 may further include an insulating cover 226 that is disposed between the bus bar frame 224 and the integrated end cover 114 of the above-described support structure 110, and prevents short circuit of the bus bar 222. This insulating cover 226 may be made of polymer synthetic resin with insulating properties.

In an embodiment, the cell cover 210 may further include a blocking portion 218 provided at the entrance of the slot 214 to block removal of the battery cell inserted into the slot 214. The blocking portion 218 may be configured to protrude from the ends of the first cover portion 210a and the second cover portion 210b toward the entrance of the slot 214, respectively, so as to support the lower ends of the battery cells inserted into the slot 214.

In addition, in an embodiment, the blocking portion 218 may have an insertion groove 218a into which a finger of a jig, which comes into contact with the inner surface of the cell cover 210 to change the width of the slot 214, that is, the gap between the first cover portion 210a and the second cover portion 210b, is inserted.

This cell cover 210 may be formed integrally. For example, the cell cover 210 may be manufactured integrally through a sheet metal processing process or an injection process.

The cell cover 210 in a simplified structure described above may be made of a metal material with higher rigidity than the case of the battery cell, thereby protecting the battery cell covered by the cell cover from external impact or vibration. For example, the cell cover 210 may be made of a material including stainless steel (SUS), which is easy to process and has high corrosion resistance.

Although not shown in FIGS. 4 and 5, the cell unit 200 may further include a clamping member configured to clamp the cell cover 210. In this case, the clamping member may be configured to clamp the cell cover 210 into which at least one battery cell is inserted so as to prevent the slot 214 of the cell cover 210 from opening or prevent the battery cell 202 inserted into the slot 214 from being separated from the cell cover 210. This clamping member may be configured as a tape or a band-shaped metal material.

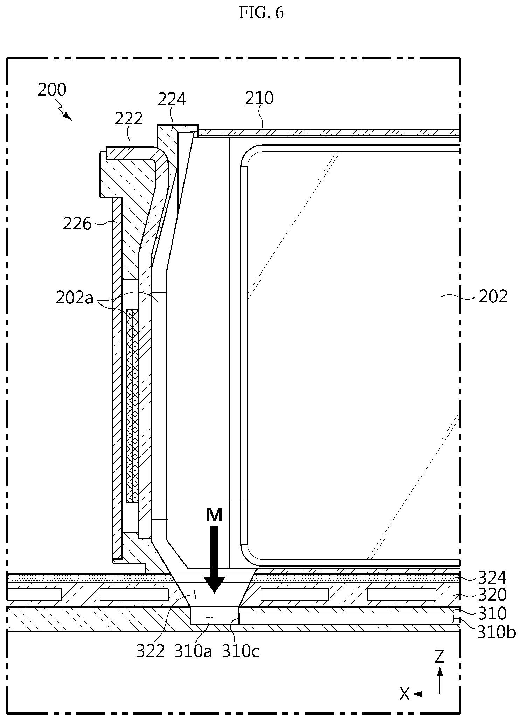

FIG. 6 illustrates a cross-sectional view taken along line A1-A1' of the battery pack shown in FIG. 1.

As shown in FIG. 6, when the cell unit 200 is seated in the accommodation room R1 of the above-described case 300, the cell cover 210 of the cell unit 200 may be disposed such that the entrance of its slot 214 faces the bottom portion 310 of the accommodation room R1.

In addition, the entrance of the pocket 310a provided in the bottom portion 310 may be provided at a position corresponding to the entrance of the slot 214. In this case, the entrance of the pocket 310a may be provided at a position corresponding to the entrance of the slot 214 of the cell cover 210, which is adjacent to the electrode lead 202a of the battery cell 202 inserted into the slot 214, among the entrance of the slot. This is due to the fact that when the thermal runaway of the battery cell 202 occurs, gas frequently vents through the edge where the electrode lead 202a of the battery cell 202 is located.

Meanwhile, the heat sink 320 disposed between the cell unit 200 and the bottom portion 310 may have a guide hole 322 that is provided at a portion of the heat sink corresponding to the entrance of the pocket 310a of the bottom portion 310 and guides the masses discharged from the battery cell 202 to the entrance of the pocket 310a. To this end, the guide hole 322 may be configured to gradually widen from the pocket 310a to the cell unit 200.

In an embodiment, the battery pack 10 may further include a TIM (Thermal Interface Material) 324 interposed between the cell unit 200 and the heat sink 320. By increasing the heat transfer rate between the cell unit 200 and the heat sink 320 through the TIM 324, the cooling performance of the heat sink 320 may be further improved.

In an embodiment, the bottom portion 310 of the case 300 may include a gas passage 310b extending along the inside of the bottom portion 310. One end of the gas passage 310b may be connected to the pocket 310a, and the other end thereof may be connected to the gas valve 316 of the case 300 described above.

In an embodiment, the bottom portion 310 may further include a membrane 310c that blocks the inlet of the gas passage 310b connected to the pocket 310a. In this case, the membrane 310c may be configured to rupture when the surrounding pressure rises to a predetermined pressure and more, thereby opening the inlet of the gas passage 310b. To this end, notches or grooves in various shapes may be formed in the membrane 310c.

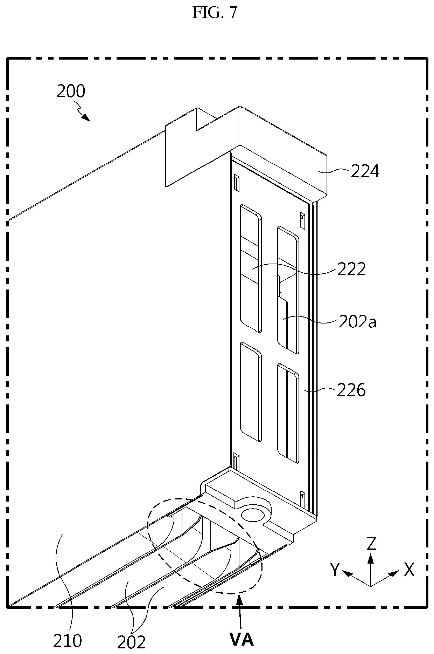

FIG. 7 shows the lower portion of the cell unit 200 shown in FIG. 6.

As shown in FIG. 7, the body of the battery cell 202 inserted into the cell cover 210 of the cell unit 200 and the bus bar frame 224 coupled to the end of the cell cover 210 may be positioned at predetermined intervals, thereby providing a venting area VA through which the gas of the battery cell 202 is vented at the lower end of the cell unit 200. The entrance to the pocket 310a described above may be provided at a position corresponding to the venting area VA.

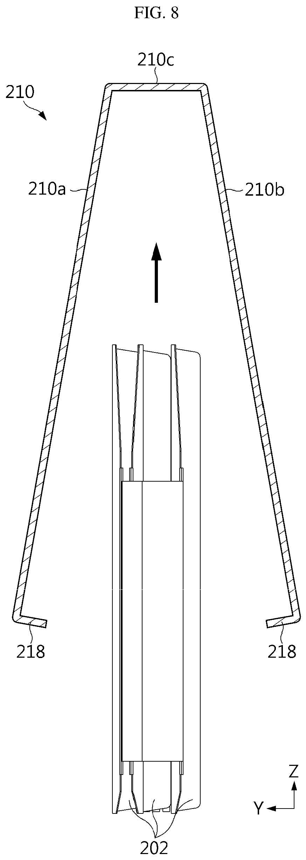

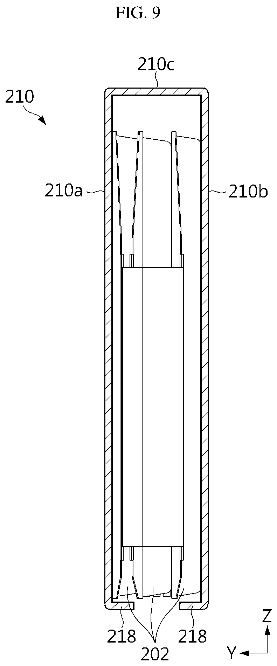

FIGS. 8 and 9 illustrate a method of assembling the cell unit 200 shown in FIG. 4.

First, as shown in FIG. 8, a finger of a jig may be inserted into the cell cover 210 to expand the gap between the first cover portion 210a and the second cover portion 210b of the cell cover 210, and then the battery cell 202 may be safely inserted between the first cover portion 210a and the second cover portion 210b.

The blocking portion 218 of the cell cover 210 may have an appropriate length and shape so as not to damage the battery cells inserted as described above.

Next, as shown in FIG. 9, after at least one battery cell 202 is inserted into the cell cover 210, the finger of the jig is removed, so that the first cover portion 210a and the second cover portion 210b of the cell cover 210 return to their original positions by their own elastic force.

Then, the blocking portion 218 of the cell cover 210 may support the lower end of the battery cell 202 inserted between the first cover portion 210a and the second cover portion 210b to block removal of the battery cell 202. To this end, the blocking portion 218 may be bent from the end of each of the first cover portion 210a and the second cover portion 210b toward the inside of the cell cover 210 to form a hook structure.

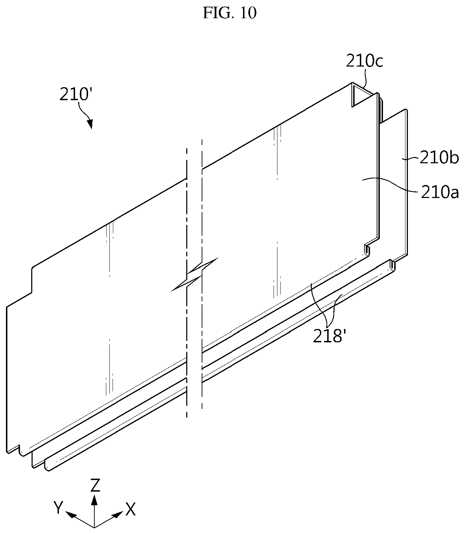

FIG. 10 illustrates a battery cell cover 210' according to a modified embodiment.

As shown in FIG. 10, a blocking portion 218' of the battery cell cover 210' may be bent from the end of each of the first cover portion 210a and the second cover portion 210b of the battery cell cover 210' toward the inside of the battery cell cover 210', and then bent toward the third cover portion 210c to form a hook structure.

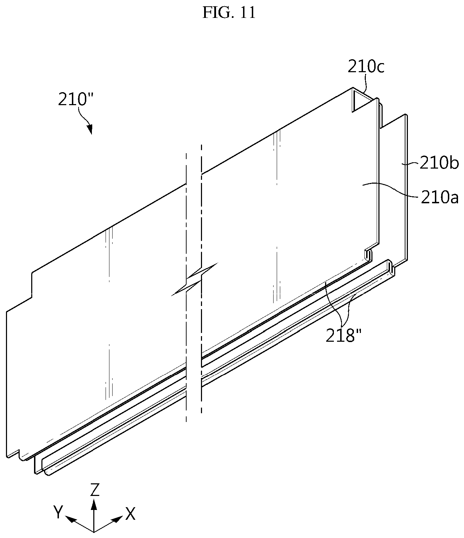

FIG. 11 illustrates a battery cell cover 210" according to another modified embodiment.

As shown in FIG. 11, a blocking portion 218" of the battery cell cover 210" may be bent from the end of each of the first cover portion 210a and the second cover portion 210b of the battery cell cover 210" toward the third cover portion 210c and then bent again in a round shape toward the opposite side of the third cover portion 210c. As described above, the blocking portion 218" may be configured to support battery cells by a round surface, thereby preventing damage to soft battery cells such as pouch-type battery cells.

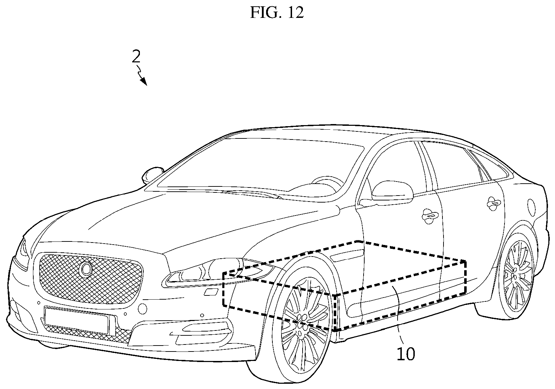

FIG. 12 illustrates a vehicle 2 according to an embodiment of the present disclosure.

As shown in FIG. 12, the vehicle 2 according to an embodiment of the present disclosure may include at least one battery pack 10 according to any one of the various embodiments described above.

The battery pack 10 provided in the vehicle 2 as described above may provide electrical energy required for various operations of the vehicle 2. For reference, the battery pack according to the present disclosure may be applied to ESSs (Energy Storage Systems), as well as various electric devices or electric systems, in addition to vehicles.

As described above, according to the present disclosure, a pocket configured to collect a mass discharged from a battery cell and falling under its own weight may be provided in the bottom portion of a battery pack case, thereby effectively venting gases in the case of thermal runaway of the battery cell and preventing damage or explosion of the battery pack due to an increase in the internal pressure of the battery pack.

In addition, since multiple battery cells may be partially covered by a cell cover with a simplified structure and directly mounted in the battery pack case, instead of being accommodated in a separate module case and mounted in the battery pack case, it is possible to reduce the weight and volume of the entire battery pack, increase the energy density of the battery pack, facilitate safe handling and installation of the battery cells when manufacturing the battery pack, and reduce manufacturing costs.

In addition, a gas passage leading to the pocket may be provided in the bottom portion of the battery pack case, thereby diversifying gas venting paths inside the battery pack and providing an alternative path in the case where other gas venting paths are blocked.

In addition, the gas flowing through a gas passage provided in the bottom portion of the battery pack case or another gas passage provided on the wall of the corresponding case may be vented in a predetermined direction through a gas valve, so that the gas venting direction of the battery pack mounted on the bottom of the vehicle may be set to the rear direction or lateral direction rather than the upward direction where the occupants are located, thereby improving the safety of the occupants.

In addition, a blocking portion of the cell cover may support the battery cell inserted into a slot of the cell cover to block removal of the battery cell, thereby preventing the battery cell from changing in its position or leaving out of the cell cover and ensuring the safety and reliability of the battery pack.

In addition, an insertion groove may be provided in the blocking portion of the cell cover such that a jig that comes into contact with the inner surface of the cell cover and changes the slot width of the cell cover is easily inserted thereto, thereby facilitating insertion of a battery cell into the cell cover and preventing damage to the battery cell.

Furthermore, it goes without saying that the embodiments according to the present disclosure are able to solve various technical problems other than those mentioned in this specification in the relevant technical field as well as related technical fields.

## Claims

1. A battery pack (10) comprising:
a cell unit (200) comprising at least one battery cell (202); and
a case (300) provided with an accommodation room (R1) having a bottom portion (310) on which the cell unit (200) is seated and accommodating the cell unit in the accommodation room (R1),
wherein the bottom portion (310) comprises a pocket (310a), the pocket is configured to collect masses discharged and falling from the battery cell (202) included in the cell unit (200),
**characterised in that** the cell unit (200) further comprises a cell cover (210) having a slot (214) into which the at least one battery cell (202) is inserted and an opening (216) through which an electrode lead (202a) of the at least one battery cell inserted into the slot is exposed, and covering the at least one battery cell (202) inserted into the slot (214).

2. The battery pack (10) of claim 1, wherein the cell cover (210) is disposed such that the entrance of the slot (214) faces the bottom portion (310), and
wherein the entrance of the pocket (310a) is provided at a position corresponding to the entrance of the slot (214).

3. The battery pack (10) of claim 2, wherein the entrance of the pocket (310a) is provided at a position corresponding to the entrance of the slot (214), which is adjacent to the electrode lead (202a) of the at least one battery cell (202), among the entrance of the slot (214).

4. The battery pack (10) of claim 1, wherein the cell unit (200) further comprises:
a bus bar electrically connected to the electrode lead (202); and
a bus bar frame (224) disposed in the opening of the cell cover (210) to support the bus bar.

5. The battery pack (10) of claim 1, wherein the bottom portion (310) further comprises a gas passage (310b) extending along the inside of the bottom portion (310), and
wherein the pocket (310a) is connected to the gas passage (310b).

6. The battery pack (10) of claim 5, wherein the bottom portion (310) further comprises a membrane(310c) configured to block an inlet of the gas passage connected to the pocket (310a), and
wherein the membrane (310c) is configured to rupture when the surrounding pressure rises to a predetermined pressure or more to open the inlet of the gas passage.

7. The battery pack (10) of claim 1, further comprising a heat sink (320) disposed between the cell unit (200) and the bottom portion (310) and configured to cool the battery cell (202) included in the cell unit (200),
wherein the heat sink (320) has a guide hole (322) provided in a portion of the heat sink (320) corresponding to the entrance of the pocket (310a) to guide the masses to the entrance of the pocket.

8. The battery pack (10) of claim 7, wherein the guide hole (322) gradually widens from the pocket (310a) to the cell unit (200).

9. The battery pack (10) of claim 7, further comprising a Thermal Interface Material (324) interposed between the cell unit (200) and the heat sink (320).

10. The battery pack (10) of claim 1, wherein the cell unit (200) is provided in plural,
wherein the plurality of cell units (200) is stacked on each other in one direction.

11. The battery pack (10) of claim 1, wherein the at least one battery cell (202) is a pouch-type secondary battery cell.

12. A vehicle (2) comprising the battery pack according to any one of claims 1 to 11.

## Patentansprüche

1. Batteriepack (10), umfassend:
• eine Zelleneinheit (200), die mindestens eine Batteriezelle (202) umfasst; und
• ein Gehäuse (300), das mit einem Aufnahmeraum (R1) versehen ist, der einen Bodenabschnitt (310) aufweist, auf dem die Zelleneinheit (200) aufgesetzt ist, und die Zelleneinheit im Aufnahmeraum (R1) aufnimmt,
wobei der Bodenabschnitt (310) eine Tasche (310a) umfasst, wobei die Tasche so konfiguriert ist, dass sie Massen sammelt, die aus der in der Zelleneinheit (200) enthaltenen Batteriezelle (202) abgegeben werden und herabfallen,
**dadurch gekennzeichnet, dass** die Zelleneinheit (200) ferner eine Zellenabdeckung (210) umfasst, die einen Schlitz (214) aufweist, in den die mindestens eine Batteriezelle (202) eingesetzt ist, und eine Ö4nung (216), durch die eine Elektrodenleitung (202a) der mindestens einen in den Schlitz eingesetzten Batteriezelle freigelegt ist, und die die mindestens eine in den Schlitz (214) eingesetzte Batteriezelle (202) abdeckt.

2. Batteriepack (10) nach Anspruch 1, wobei die Zellenabdeckung (210) so angeordnet ist, dass der Einlass des Schlitzes (214) dem Bodenabschnitt (310) zugewandt ist, und
wobei der Einlass der Tasche (310a) an einer Position vorgesehen ist, die dem Einlass des Schlitzes (214) entspricht.

3. Batteriepack (10) nach Anspruch 2, wobei der Einlass der Tasche (310a) an einer Position vorgesehen ist, die dem Einlass des Schlitzes (214) entspricht, der von dem Einlass des Schlitzes (214) benachbart zu der Elektrodenleitung (202a) der mindestens einen Batteriezelle (202) ist.

4. Batteriepack (10) nach Anspruch 1, wobei die Zelleneinheit (200) ferner umfasst:
• eine Sammelschiene, die elektrisch mit der Elektrodenleitung (202) verbunden ist; und
• einen Sammelschienenrahmen (224), der in der Ö4nung der Zellenabdeckung (210) angeordnet ist, um die Sammelschiene zu tragen.

5. Batteriepack (10) nach Anspruch 1, wobei der Bodenabschnitt (310) ferner einen Gaskanal (310b) umfasst, der sich entlang der Innenseite des Bodenabschnitts (310) erstreckt, und
wobei die Tasche (310a) mit dem Gaskanal (310b) verbunden ist.

6. Batteriepack (10) nach Anspruch 5, wobei der Bodenabschnitt (310) ferner eine Membran (310c) umfasst, die so konfiguriert ist, dass sie einen Einlass des mit der Tasche (310a) verbundenen Gaskanals blockiert, und
wobei die Membran (310c) so konfiguriert ist, dass sie reißt, wenn der Umgebungsdruck auf einen vorbestimmten Druck oder mehr ansteigt, um den Einlass des Gaskanals zu ö4nen.

7. Batteriepack (10) nach Anspruch 1, ferner umfassend einen Kühlkörper (320), der zwischen der Zelleneinheit (200) und dem Bodenabschnitt (310) angeordnet und so konfiguriert ist, dass er die in der Zelleneinheit (200) enthaltene Batteriezelle (202) kühlt,
wobei der Kühlkörper (320) ein Führungsloch (322) aufweist, das in einem Abschnitt des Kühlkörpers (320) vorgesehen ist, der dem Einlass der Tasche (310a) entspricht, um die Massen zum Einlass der Tasche zu führen.

8. Batteriepack (10) nach Anspruch 7, wobei sich das Führungsloch (322) von der Tasche (310a) zur Zelleneinheit (200) allmählich erweitert.

9. Batteriepack (10) nach Anspruch 7, ferner umfassend ein thermisches Grenzflächenmaterial (324), das zwischen der Zelleneinheit (200) und dem Kühlkörper (320) angeordnet ist.

10. Batteriepack (10) nach Anspruch 1, wobei die Zelleneinheit (200) in einer Vielzahl vorgesehen ist,
wobei die Vielzahl von Zelleneinheiten (200) in einer Richtung übereinander gestapelt ist.

11. Batteriepack (10) nach Anspruch 1, wobei die mindestens eine Batteriezelle (202) eine Sekundärbatteriezelle vom Pouch-Typ ist.

12. Fahrzeug (2), umfassend den Batteriepack nach einem der Ansprüche 1 bis 11.

## Revendications

1. Bloc-batterie (10) comprenant :
• une unité de cellule (200) comprenant au moins une cellule de batterie (202) ; et
• un boîtier (300) muni d'un espace de logement (R1) ayant une partie inférieure (310) sur laquelle l'unité de cellule (200) est logée et logeant l'unité de cellule dans l'espace de logement (R1),
dans lequel la partie inférieure (310) comprend une poche (310a), la poche étant configurée pour collecter des masses déchargées et tombant de la cellule de batterie (202) incluse dans l'unité de cellule (200),
**caractérisé en ce que** l'unité de cellule (200) comprend en outre un couvercle de cellule (210) ayant une fente (214) dans laquelle ladite au moins une cellule de batterie (202) est insérée et une ouverture (216) à travers laquelle un conducteur d'électrode (202a) de ladite au moins une cellule de batterie insérée dans la fente est exposé, et recouvrant ladite au moins une cellule de batterie (202) insérée dans la fente (214).

2. Bloc-batterie (10) selon la revendication 1, dans lequel le couvercle de cellule (210) est disposé de sorte que l'entrée de la fente (214) fait face à la partie inférieure (310), et
dans lequel l'entrée de la poche (310a) est prévue dans une position correspondant à l'entrée de la fente (214).

3. Bloc-batterie (10) selon la revendication 2, dans lequel l'entrée de la poche (310a) est prévue dans une position correspondant à l'entrée de la fente (214), qui est adjacente au conducteur d'électrode (202a) de ladite au moins une cellule de batterie (202), parmi l'entrée de la fente (214).

4. Bloc-batterie (10) selon la revendication 1, dans lequel l'unité de cellule (200) comprend en outre :
• une barre omnibus connectée électriquement au conducteur d'électrode (202) ; et
• un cadre de barre omnibus (224) disposé dans l'ouverture du couvercle de cellule (210) pour soutenir la barre omnibus.

5. Bloc-batterie (10) selon la revendication 1, dans lequel la partie inférieure (310) comprend en outre un passage de gaz (310b) s'étendant le long de l'intérieur de la partie inférieure (310), et
dans lequel la poche (310a) est connectée au passage de gaz (310b).

6. Bloc-batterie (10) selon la revendication 5, dans lequel la partie inférieure (310) comprend en outre une membrane (310c) configurée pour bloquer une entrée du passage de gaz connecté à la poche (310a), et
dans lequel la membrane (310c) est configurée pour se rompre lorsque la pression environnante monte à une pression prédéterminée ou plus pour ouvrir l'entrée du passage de gaz.

7. Bloc-batterie (10) selon la revendication 1, comprenant en outre un dissipateur thermique (320) disposé entre l'unité de cellule (200) et la partie inférieure (310) et configuré pour refroidir la cellule de batterie (202) incluse dans l'unité de cellule (200),
dans lequel le dissipateur thermique (320) a un trou de guidage (322) prévu dans une partie du dissipateur thermique (320) correspondant à l'entrée de la poche (310a) pour guider les masses vers l'entrée de la poche.

8. Bloc-batterie (10) selon la revendication 7, dans lequel le trou de guidage (322) s'élargit progressivement depuis la poche (310a) vers l'unité de cellule (200).

9. Bloc-batterie (10) selon la revendication 7, comprenant en outre un matériau d'interface thermique (324) interposé entre l'unité de cellule (200) et le dissipateur thermique (320).

10. Bloc-batterie (10) selon la revendication 1, dans lequel l'unité de cellule (200) est prévue en pluralité,
dans lequel la pluralité d'unités de cellule (200) est empilée les unes sur les autres dans une direction.

11. Bloc-batterie (10) selon la revendication 1, dans lequel ladite au moins une cellule de batterie (202) est une cellule de batterie secondaire de type poche.

12. Véhicule (2) comprenant le bloc-batterie selon l'une quelconque des revendications 1 à 11.
